# EUROPÄISCHE PATENTANMELDUNG

(11) **EP 4 209 394 A1**
(43) Veröffentlichungstag der Anmeldung: **12.07.2023**
(21) Anmeldenummer: 22150676.9
(22) Anmeldetag: 10.01.2022
(51) Int. Cl.: B60R 19/56

(54) **FAHRSTELLGRUPPE EINES NUTZFAHRZEUGS MIT UNTERFAHRSCHUTZ, BODENGRUPPE UND NUTZFAHRZEUG**

(71) Anmelder: Schmitz Cargobull AG, 48341 Altenberge (DE)
(72) Erfinder: KARRENGARN, Hendrik, 48159 Münster (DE); SCHWARZER, Stefan, 48341 Alterberge (DE); STIPPEL, Maximilian, 48145 Münster (DE); ESCH, Julian, 48477 Hörstel (DE); HERBRICH, Christian, 48324 Sendenhorst (DE); KEMPF, Jürgen, 86929 Penzing (DE); MUFFERT, Matthias, 48653 Coesfeld (DE)
(74) Vertreter: Cohausz & Florack

(57) **Zusammenfassung**

Beschrieben und dargestellt ist eine Fahrgestellgruppe (10) eines Nutzfahrzeugs (1), insbesondere Lastkraftwagen, Anhänger oder Sattelauflieger, mit einem Chassis (13) und einem dem hinteren Ende des Chassis (13) zugeordneten und von dem Chassis (13) getragenen Unterfahrschutz (14) zur Vermeidung eines Unterfahrens des Chassis (13) im Falle eines Auffahrunfalls, wobei der Unterfahrschutz (14) von einer unteren Fahrstellung in Richtung des hinteren Endes des Chassis (13) und nach oben in eine Mehrzahl von Verladestellungen und zurück verstellbar ist. Damit das Nutzfahrzeug zuverlässiger verladen werden kann, ist vorgesehen, dass wenigstens ein verstellbarer Niederhalter (21) derart vorgesehen ist, so dass der Unterfahrschutz (14) gegen eine Rückstellkraft des Niederhalters (21) von der Fahrstellung in die mehreren Verladestellungen verstellbar ist.

## Beschreibung

Die Erfindung betrifft eine Fahrgestellgruppe eines Nutzfahrzeugs, insbesondere Lastkraftwagen, Anhänger oder Sattelauflieger, mit einem Chassis und einem dem hinteren Ende des Chassis zugeordneten und von dem Chassis getragenen Unterfahrschutz zur Vermeidung eines Unterfahrens des Chassis im Falle eines Auffahrunfalls, wobei der Unterfahrschutz von einer unteren Fahrstellung in Richtung des hinteren Endes des Chassis und nach oben in eine Mehrzahl von Verladestellungen und zurück verstellbar ist. Ferner betrifft die Erfindung eine Bodengruppe eines Nutzfahrzeugs mit einer entsprechenden Fahrgestellgruppe und ein Nutzfahrzeug mit einer entsprechenden Bodengruppe oder mit einer entsprechenden Fahrgestellgruppe.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Die Nutzfahrzeuge können Planenaufbauten aufweisen, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern. Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sind. Gegenüber von dem Rückwandrahmen ist eine Stirnwand vorgesehen. Dabei können entsprechende Stirnwände und Rückwände in gleicher Weise bei Planenaufbauten und bei Kofferaufbauten vorgesehen sein.

Bei Kofferaufbauten können die Seitenwände, das Dach, die Stirnwand, der Boden und/oder die Türen in Form von mehrschichtigen Nutzfahrzeugpaneelen aufgebaut sein, die strukturgebende Innendecklagen, strukturgebende Außendecklagen und dazwischen eine Kernlage aus geschäumtem Kunststoff umfassen. Die entsprechenden Außendecklagen und Innendecklagen können bedarfsweise selbst jeweils mehrlagig ausgebildet sein und dienen der Aussteifung der Nutzfahrzeugpaneele, weshalb die Außendecklagen und Innendecklagen meist wenigstens eine Schicht aus einem Metall und/oder einem faserverstärkten Kunststoff aufweisen. Die einzelnen Nutzfahrzeugpaneele eines Kofferaufbaus werden typischerweise jeweils über Eck miteinander verbunden, um einen quaderförmigen Kofferaufbau zu bilden, der darin einen Laderaum zur Aufnahme der zu transportierenden Güter bereithält.

Da die Kernlage der Nutzfahrzeugpaneele aus einem geschäumten Kunststoff eine hohe thermische Isolation bereitstellen kann, sind entsprechende Kofferaufbauten insbesondere auch für den Transport von temperaturempfindlichen Gütern, also beispielsweise für den sogenannten Kühltransport, geeignet. Dieselben Kofferaufbauten können auch für den Transport von feuchtigkeitsempfindlichen Gütern, also den sogenannten Trockentransport, verwendet werden.

Die bekannten Nutzfahrzeuge weisen ein Chassis und ein an dem Chassis festgelegtes Fahrwerk mit einem oder mehreren Räderpaaren auf. Man spricht in diesem Zusammenhang auch von einachsigen, zweiachsigen oder dreiachsigen Nutzfahrzeugen, auch wenn die Räder der entsprechenden Räderpaare nicht körperlich durch eine Achse verbunden sein müssen, sondern auch über eine Einzelradaufhängung verfügen können. Ja nach Art des Nutzfahrzeugs können die Räderpaare dem vorderen oder dem hinteren Ende des Nutzfahrzeugs zugeordnet sein. Dies ist meist bei mehrachsigen Anhängern der Fall. Bei Sattelaufliegern sind die Räderpaare jedoch mit einem nicht unerheblichen Abstand zum vorderen sowie zum hinteren Ende des Nutzfahrzeugs vorgesehen. Von dem Fahrwerk wird eine Bodenstruktur getragen, die einen Ladeboden bereitstellen kann, auf den sich zu transportierende Ladung aufstellen lässt. Im Falle von sogenannten Kipperfahrzeugen, kann die Bodenstruktur eine Mulde tragen, in der Schüttgut transportiert werden kann. Die Bodenstruktur bildet zusammen mit einer Fahrgestellgruppe eine Bodengruppe des Nutzfahrzeugs aus. Dabei umfasst die Fahrgestellgruppe wenigstens das Chassis und einen Unterfahrschutz. Zudem kann die Fahrgestellgruppe noch das eigentliche Fahrwerk umfassen.

Fahrgestellgruppen von Nutzfahrzeugen weisen bis auf einige Ausnahmen einen hinteren Unterfahrschutz auf. Dieser ist typischerweise gesetzlich vorgeschrieben und soll ein Unterfahren des Chassis durch Fahrzeuge verhindern, die von hinten auf das Nutzfahrzeug auffahren. Zu diesem Zweck weist ein Unterfahrschutz meist einen Querträger auf, der von einem von hinten auf das Nutzfahrzeug auffahrenden Fahrzeug angefahren wird und so verhindert, dass das auffahrende Fahrzeug weiter unter das Chassis gelangen kann. Auf diese Weise sollen nach Möglichkeit schwerwiegende Verletzungen von Verkehrsteilnehmern vermieden werden. Dieser Schutz ist grundsätzlich umso ausgeprägter, wenn der Unterfahrschutz weiter nach unten ragt und somit tiefer angefahren werden kann.

Der Unterfahrschutz eines Nutzfahrzeugs kann jedoch in bestimmten Situationen auf dem Untergrund aufsetzen. Dies ist insbesondere der Fall, wenn das Nutzfahrzeug eine Rampe hinauf fährt, wie dies beispielsweise beim Verladen von Nutzfahrzeugen auf Schiffe der Fall sein kann. Bei einem entsprechenden Kontakt wirken infolge des nicht unerheblichen Gewichts des Nutzfahrzeugs bedarfsweise erhebliche Kräfte auf den Unterfahrschutz ein. Infolge dieser Kräfte kann es zu Beschädigungen des Unterfahrschutzes oder sogar des Chassis des Nutzfahrzeugs kommen, was den sicheren Betrieb des Nutzfahrzeugs gefährdet und erhebliche Reparaturkosten nach sich ziehen kann.

Daher lieget der vorliegenden Erfindung die Aufgabe zugrunde, die Fahrgestellgruppe, die Bodengruppe und das Nutzfahrzeug jeweils der eingangs genannten und zuvor näher erläuterten Art derart auszugestalten und weiterzubilden, dass das Nutzfahrzeug zuverlässiger verladen werden kann.

Diese Aufgabe ist bei einer Fahrgestellgruppe nach dem Oberbegriff von Anspruch 1 dadurch gelöst, dass wenigstens ein verstellbarer Niederhalter derart vorgesehen ist, so dass der Unterfahrschutz gegen eine Rückstellkraft des Niederhalters von der Fahrstellung in die mehreren Verladestellungen verstellbar ist.

Die Aufgabe ist ferner gemäß Anspruch 14 gelöst durch eine Bodengruppe eines Nutzfahrzeugs, insbesondere Lastkraftwagen, Anhänger oder Sattelauflieger, mit einer Fahrgestellgruppe nach einem der Ansprüche 1 bis 13 und einem sich in Längsrichtung des Chassis oberhalb des Chassis erstreckenden Ladeboden zum Aufstellen von Ladung.

Zudem ist die genannte Aufgabe gemäß Anspruch 15 gelöst durch ein Nutzfahrzeug, insbesondere Lastkraftwagen, Anhänger oder Sattelauflieger, mit einer Bodengruppe nach Anspruch 14 oder mit einer Fahrgestellgruppe nach einem der Ansprüche 1 bis 13.

Durch die Verstellbarkeit des Unterfahrschutzes aus der unteren Fahrstellung in eine Mehrzahl von unterschiedlichen oberen Verladestellungen kann der Unterfahrschutz durch den beim Verladen gegebenenfalls auftretenden Kontakt mit dem Untergrund so weit nach hinten oben ausgelenkt werden, dass das Verladen nicht weiter behindert wird. Gleichzeitig wird so eine Beschädigung der Fahrgestellgruppe vermieden, die auftreten könnte, wenn der Unterfahrschutz nicht aus der unteren Fahrstellung in eine obere Verladestellung verstellt werden könnte. Der Kontakt mit dem Untergrund kann beim Verladen der Nutzfahrzeuge insbesondere beim Auffahren auf eine Rampe und/oder beim Herunterfahren von einer Rampe erfolgen, indem der Unterfahrschutz auf dem Untergrund aufsetzt. Der Unterfahrschutz kann dann nach hinten oben bezogen auf das Chassis ausweichen, um eine Beschädigung des Nutzfahrzeugs zu vermeiden. Dies kann prinzipiell unabhängig davon erfolgen, ob der Unterfahrschutz beim Vorwärts- oder Rückwärtsfahren des Nutzfahrzeugs mit einem Hindernis oder dem Untergrund in Kontakt gerät.

Dabei ist es besonders bevorzugt, weil besonders zweckmäßig, wenn der Unterfahrschutz aus der Fahrstellung stufenlos verstellt werden kann. Der Unterfahrschutz kann dann prinzipiell in im Wesentlichen beliebig viele Verladestellungen verstellt werden. Mit anderen Worten kann der Unterfahrschutz immer gerade soweit aus der Fahrstellung ausgelenkt werden, wie es zweckmäßig oder erforderlich ist, um dem Hindernis oder dem Untergrund auszuweichen, wenn der Unterfahrschutz mit dem Hindernis oder dem Untergrund in Kontakt gerät.

Durch die Verwendung eines Niederhalters, der dem entsprechenden Schwenken des Unterfahrschutzes nach oben eine Rückstellkraft entgegensetzt, wird sichergestellt, dass der Unterfahrschutz so weit wie nötig oder nicht übermäßig ausgelenkt wird. Ansonsten könnte der Unterfahrschutz in einer oberen Stellung mit erheblicher Geschwindigkeit gegen das Chassis schlagen und dieses oder den Unterfahrschutz selbst beschädigen. Zudem sorgt die Rückstellkraft des Niederhalters dafür, dass der Unterfahrschutz nach dem Kontakt mit dem Untergrund wieder in die untere Fahrstellung zurückgelangt, um so wieder unmittelbar die eigentliche Funktion des Unterfahrschutzes auszuüben. Es kann so auch nicht zu einer Fehlbedienung durch den Fahrer kommen, etwa indem er vergisst, den Unterfahrschutz freizugeben oder den Unterfahrschutz wieder zurück nach unten zu verstellen.

Bei einer ersten besonders bevorzugten Ausgestaltung der Fahrgestellgruppe ist der wenigstens eine Niederhalter als Federelement ausgebildet. Auf diese Weise kann sehr einfach, kostengünstig und zuverlässig die erforderliche Rückstellkraft aufgebracht werden, um den Unterfahrschutz zurück in die untere Fahrstellung zu verstellen und dort auch zuverlässig zu halten. Dies wird umso mehr erreicht, wenn das Federelement ein Gasdruckfederelement ist, welches hinsichtlich ihrer Federkennlinie sehr genau an die jeweiligen Anforderungen angepasst werden kann.

Unabhängig davon kann der wenigstens eine Niederhalter so vorgesehen sein, dass der Unterfahrschutz über den gesamten Verstellweg von der unteren Fahrstellung in die Verladestellungen, insbesondere in die oberste mögliche Verladestellung, entgegen der Rückstellkraft des wenigstens einen Niederhalters verstellbar ist. Das führt dazu, dass der Unterfahrschutz aus jeder der möglichen Verladestellungen infolge der Rückstellkraft zuverlässig und definiert in die unterer Fahrstellung zurückgelangt. Zudem wird verhindert, dass der Unterfahrschutz undefiniert und ungedämpft nach oben ausgelenkt wird. Auf diese Weise können Beschädigungen an dem Unterfahrschutz oder dem Chassis vermieden werden.

Dabei bietet es sich insbesondere an, wenn der wenigstens eine Niederhalter so vorgesehen ist, dass der Unterfahrschutz selbsttätig aus den Verladestellungen in Richtung der Rückstellkraft des wenigstens einen Niederhalters zurück in die untere Fahrstellung verstellbar ist. So wird zuverlässig erreicht, dass der Unterfahrschutz seine Funktion zu jeder Zeit ausüben kann, ohne dass es dafür zwingend eines Eingriffs des Fahrers bedarf. Dies gilt insbesondere dann, wenn die Verstellung nicht nur selbsttätig, sondern auch zwangsweise erfolgt. Zwangsweise bedeutet dabei, dass die Verstellung des Unterfahrschutzes zurück in die Fahrstellung automatisch erfolgt, wenn und in dem Maße das Chassis sich, etwa in einer Verladesituation, weiter vom Untergrund entfernt. Dabei spielt es weiter vorzugsweise keine Rolle, in welcher der Verladestellungen sich der Unterfahrschutz befindet. So kann der Unterfahrschutz vorzugsweise auch aus der obersten möglichen Verladestellung selbsttätig in Richtung der Rückstellkraft des wenigstens einen Niederhalters zurück in die untere Fahrstellung verstellbar sein.

Zudem kann vorgesehen sein, dass der Unterfahrschutz in den Verladestellungen, insbesondere in der obersten möglichen Verladestellung, nicht arretierbar vorgesehen ist. Es ist dann also nicht nur so, dass der Unterfahrschutz in der Verladestellung nicht arretiert werden muss, was mit einem zusätzlichen Aufwand für den Fahrer einhergehen würde. Es wäre tatsächlich so, dass keine Arretierung in einer Verladestellung erfolgen kann. So wäre sichergestellt, dass der Unterfahrschutz immer wieder zurück in die untere Fahrstellung gelangt und dass der Unterfahrschutz so seine eigentliche Funktion ausüben kann. Es kann dann nämlich schlicht nicht vergessen werden, die Arretierung wieder zu lösen, oder ein beabsichtigtes Lösen der Arretierung fehlschlagen.

Besonders einfach und zuverlässig ist es, wenn das Chassis wenigstens ein Schwenkgelenk zum Schwenken des Unterfahrschutzes von der unteren Fahrstellung in die Verladestellungen, insbesondere die oberste mögliche Verladestellung, und zurück in die untere Fahrstellung aufweist. Fehlfunktionen können dadurch verringert werden. Außerdem können entsprechende Schwenkgelenke recht hohe Kräfte aufnehmen und weiterleiten, so dass auch bei widrigeren Verladesituationen eine nachhaltige Beschädigung des Unterfahrschutzes und seiner Aufhängung am Chassis vermieden werden kann.

Das Chassis kann alternativ oder zusätzlich wenigstens einen Fahrstellungsanschlag zum Anschlagen an wenigstens einen Fahrstellungsanschlag des Unterfahrschutzes in der unteren Fahrstellung aufweisen. Auf diese Weise lässt sich die untere Fahrstellung des Unterfahrschutzes zuverlässig definieren, so dass der Unterfahrschutz seine eigentliche Funktion stets ausüben kann. Wenn darüber hinaus der wenigstens eine Fahrstellungsanschlag des Chassis und/oder der wenigstens eine Fahrstellungsanschlag des Unterfahrschutzes wenigstens ein elastisches Dämpferelement zum Dämpfen des Anschlagens des wenigstens einen Fahrstellungsanschlags des Unterfahrschutzes an den wenigstens einen Fahrstellungsanschlag des Chassis aufweist, kann die gesamte Konstruktion geschont werden. Es kommt dann nicht zu übermäßigen Schlägen des Unterfahrschutzes an das Chassis, wenn der Unterfahrschutz zurück in die untere Fahrstellung verstellt wird. Die Dämpfung kann somit vermeiden, dass es zu Beschädigungen an dem Unterfahrschutz oder dem Chassis kommt.

Alternativ oder zusätzlich kann das Chassis wenigstens einen Verladeanschlag zum Anschlagen an wenigstens einen Verladeanschlag des Unterfahrschutzes in der obersten möglichen Verladestellung aufweisen. Dadurch wird sichergestellt, dass der Unterfahrschutz nicht über die vorgesehene oberste Verladestellung hinaus verstellt werden kann. Dies könnte ansonsten etwa passieren, wenn der Unterfahrschutz, etwa in einer Verladesituation, sehr heftig auf dem Untergrund aufschlägt. Dann könnte der Unterfahrschutz so stark nach oben ausgelenkt werden, dass der Unterfahrschutz unkontrolliert gegen das Chassis schlägt. Dies könnte dann zu einer Beschädigung des Chassis oder des Unterfahrschutzes führen. Dabei bietet es sich an, wenn der wenigstens eine Verladeanschlag des Chassis und/oder der wenigstens eine Verladeanschlag des Unterfahrschutzes wenigstens ein elastisches Dämpferelement zum Dämpfen des Anschlagens des wenigstens einen Verladeanschlags des Unterfahrschutzes an den wenigstens einen Verladeanschlag des Chassis aufweist. Auf diese Weise können die Kräfte über das Dämpferelement abgeleitet werden, um den Unterfahrschutz und das Chassis vor übermäßiger Krafteinleitung zu schützen.

Wird dem unteren Ende des Unterfahrschutzes wenigstens eine Rolle und/oder eine Kufe zugeordnet, kann vermieden werden, dass sich der Unterfahrschutz am Untergrund verhakt, wenn der Unterfahrschutz in Kontakt mit dem Untergrund kommt. Dies ist umso mehr der Fall, wenn ein Paar Rollen, und/oder ein Paar Kufen zur Anlage an einen Untergrund bei einer Verladung vorgesehen werden. Die wenigstens eine Rolle und/oder die wenigstens eine Kufe kann dabei so dem unteren Ende, bedarfsweise dem unteren Rand, des Unterfahrschutzes zugeordnet sein, dass der Unterfahrschutz zuerst mit der Rolle und/oder der Kufe in Kontakt mit einem ebenen Untergrund oder Boden gelangt. Dies kann beispielsweise erreicht werden, wenn die wenigstens eine Rolle und/oder die wenigstens eine Kufe ein unteres Ende des Unterfahrschutzes bildet.

Die wenigstens eine Rolle und/oder die wenigstens eine Kufe stellen also vornehmlich einen Anschlag gegenüber dem Untergrund bereit. Dieser Anschlag kann dabei in Längsrichtung des Chassis um wenigstens 20 cm, vorzugsweise wenigstens 40 cm, insbesondere wenigstens 60 cm, hinter dem wenigstens einen Schwenkgelenk angeordnet sein. Über diesen Abstand wird im Falle eines Kontakts des Unterfahrschutzes mit dem Untergrund ein Moment gegenüber dem Schwenkgelenk bewirkt. Infolge dieses Moments wird zuverlässig erreicht, dass der Unterfahrschutz tatsächlich auch um das Schwenkgelenk nach oben schwenkt und sich nicht etwa zwischen dem Untergrund und dem Chassis verkeilt, was zu erheblichen Beschädigungen des Unterfahrschutzes und/oder des Chassis führen kann. Je größer der Abstand zwischen dem Anschlag und dem wenigstens einen Schwenkgelenk ist, desto größer ist das um das Schwenkgelenk wirkende Moment und umso zuverlässiger wird ein unproblematisches Auslenken des Unterfahrschutzes nach oben in eine Verladestellung bewirkt. Der wenigstens eine Anschlag ist dabei in Längsrichtung hinter dem Schwenkgelenk angeordnet, womit gemeint ist, dass der Anschlag weiter in Richtung des hinteren Endes des Chassis vorgesehen ist als das wenigstens eine Schwenkgelenk, das mithin gegenüber dem wenigstens einen Anschlag weiter in Richtung des vorderen Endes des Chassis vorgesehen ist.

Der Unterfahrschutz umfasst der Einfachheit halber wenigstens einen sich quer zum Chassis erstreckenden Querträger und wenigstens zwei den wenigstens einen Querträger mit dem Chassis verbindende Stege. Der Querträger muss dabei nicht zwingend in einem rechten Winkel zur Längserstreckung des Chassis verlaufen. Auch muss der Querträger nicht unbedingt geradlinig ausgebildet sein. Es sind also auch Abweichungen von der genannten Form und der genannten Erstreckung möglich, auch wenn wenigstens im Wesentlichen geradlinig verlaufende und/oder sich rechtwinklig zur Längserstreckung des Chassis orientierte Querträger bevorzugt sein können.

Um ein zuverlässiges Auslenken des Unterfahrschutzes von der unteren Fahrstellung in eine obere Verladestellung sicherzustellen, kann es sich anbieten, wenn sich die Stege in der unteren Fahrstellung in einem Winkel zur Längserstreckung des Chassis von weniger als 75°, vorzugsweise weniger als 65°, insbesondere von weniger als 55°, in Richtung des Querträgers erstrecken. Ein entsprechender Winkel kann dabei auch dazu beitragen, dass der Unterfahrschutz sowohl beim Vorwärtsfahren als auch beim Rückwärtsfahren des Nutzfahrzeugs beschädigungsfrei aus der Fahrstellung in eine geeignete Verladestellung verstellt werden kann. Dabei können die Stege der Einfachheit halber wenigstens im Wesentlichen geradlinig ausgebildet sein. Zwingend ist dies aber nicht. Bei nicht wenigstens im Wesentlichen geradlinig ausgebildeten Stegen kann anstatt deren tatsächlicher Erstreckung eine effektive Erstreckung herangezogen werden, um den zuvor angesprochenen Winkel zu bestimmen. Die effektive Erstreckung wird dann durch das wenigstens eine Schwenkgelenk mit der wenigstens einen zugehörigen Rolle und/oder der wenigstens einen zugehörigen Kufe, insbesondere dem Anschlag der entsprechenden Rolle und/oder Kufe, gebildet.

Hinsichtlich des Chassis bietet es sich für Aussteifung und Ableitung von großen Kräften an, wenn das Chassis zwei Längsträger und wenigstens zwei die Längsträger miteinander verbindende Querträger aufweist. In einer Verladesituation kann der Unterfahrschutz dann recht heftig auf dem Untergrund aufschlagen, ohne dass dies zu Beschädigungen am Chassis führt. Zudem kann zweckmäßigerweise an dem Chassis wenigstens ein Fahrwerk zum Verfahren des Nutzfahrzeugs festgelegt sein. Das Fahrwerk kann dabei eine oder auch mehrere Achsen aufweisen. Im Falle von Sattelaufliegern bieten sich insbesondere drei Achsen mit jeweils wenigstens einem Räderpaar an.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einer erfindungsgemäßen Bodengruppe umfassend eine erfindungsgemäße Fahrgestellgruppe in einer perspektivischen Ansicht,
- Fig. 2: ein Detail der Fahrgestellgruppe des Nutzfahrzeugs aus Fig. 1 mit einem Unterfahrschutz in einer unteren Fahrstellung in einer perspektivischen Ansicht,
- Fig. 3: die Fahrgestellgruppe aus Fig. 2 mit dem Unterfahrschutz in einer unteren Fahrstellung in einer Seitenansicht und
- Fig. 4: die Fahrgestellgruppe aus Fig. 2 mit dem Unterfahrschutz in einer oberen Verladestellung in der Seitenansicht gemäß Fig. 3.

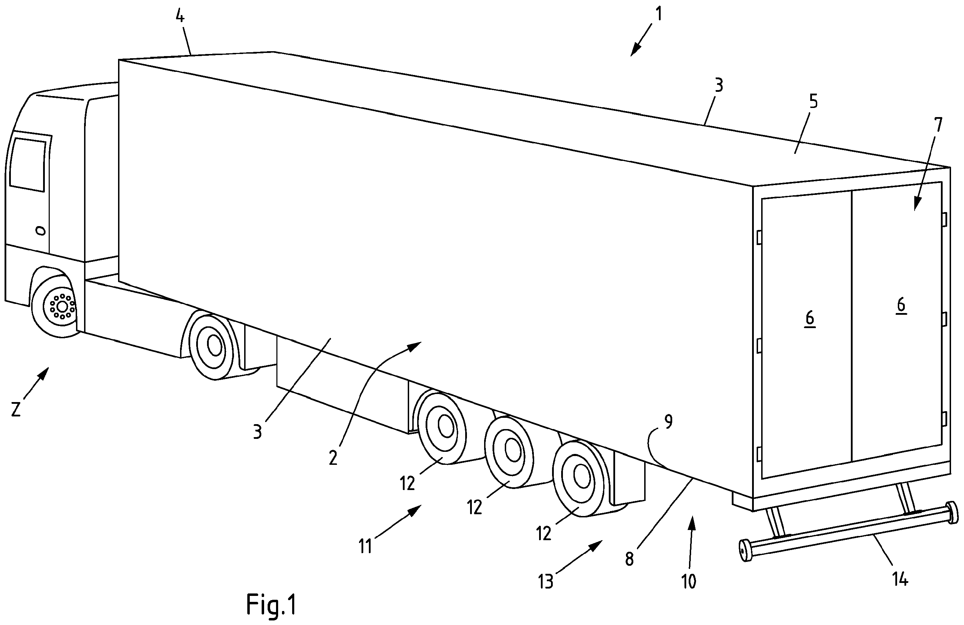

In der Fig. 1 ist ein von einer Zugmaschine Z gezogenes Nutzfahrzeug 1 in Form eines Sattelaufliegers dargestellt. Das dargestellte und insoweit bevorzugte Nutzfahrzeug weist dabei einen Kofferaufbau 2 mit Seitenwänden 3, einer Stirnwand 4, einem Dach 5 und Rückwandtüren 6 einer Rückwand 7 auf. Dabei umfasst das Nutzfahrzeug 1 eine Bodengruppe 8 mit einem Ladeboden 9, der sich in Längsrichtung des Nutzfahrzeugs erstreckt und auf dem die Ladung des Nutzfahrzeugs 1 im Kofferaufbau 2 abgestellt werden kann. Neben dem Ladeboden 9 umfasst die Bodengruppe 8 noch eine Fahrgestellgruppe 10, die bei dem dargestellten und insoweit bevorzugten Nutzfahrzeug 1 ein Fahrwerk 11 mit drei hintereinander angeordneten Achsen 12 umfasst. Jede der Achsen 12 umfasst dabei wenigstens ein Räderpaar. Die Fahrgestellgruppe 10 weist ferner ein Chassis 13 auf, an dem das Fahrgestell 10 festgelegt ist und das den Ladeboden 9 trägt. Am hinteren Ende des Nutzfahrzeugs 1 ist zudem noch ein Unterfahrschutz 14 an der Fahrgestellgruppe 9 vorgesehen, die verhindern soll, dass von hinten auf das Nutzfahrzeug 1 auffahrende Fahrzeuge unter das Chassis 13 gelangen können. Auf diese Weise sollen schwere Verletzungen anderer Verkehrsteilnehmer vermieden werden.

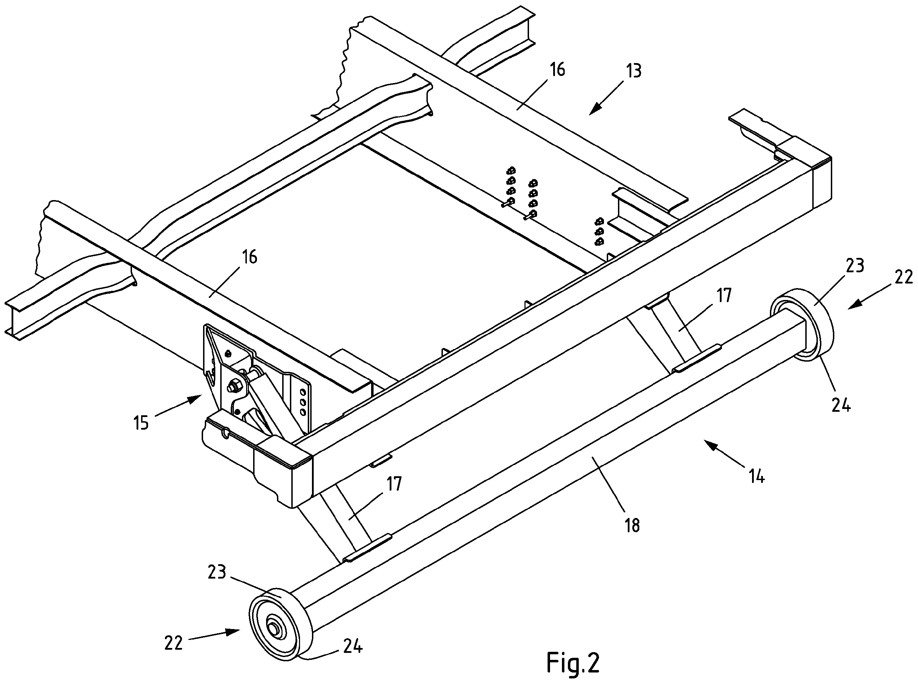

In der Fig. 2 ist ein Detail der Fahrgestellgruppe 10 dargestellt. Der Unterfahrschutz 14 ist dabei über zwei Schwenkgelenke 15 an zwei parallel laufenden Längsträgern 16 des Chassis 13 festgelegt. Mit den Schwenkgelenken 15 ist jeweils ein Steg 17 des Unterfahrschutzes 14 schwenkbar verbunden, wobei die Stege 17 an ihren hinteren Enden einen Querträger 18 halten, der im Falle eines Auffahrunfalls mit dem auffahrenden Fahrzeug in Kontakt kommen soll, um das Fahrzeug so daran zu hindern, weiter unter das Chassis 13 zu geraten. Wenn das Nutzfahrzeug 1 verladen wird, etwa auf ein Schiff, und dabei eine Rampe hinauffahren muss, kann es dazu kommen, dass der Unterfahrschutz 14 auf den Untergrund schlägt. Ein ähnlicher Kontakt ist auch beim Befahren von Anstiegen oder bei anderen Verladesituationen möglich. Der Unterfahrschutz 14 kann in einer solchen Situation nachgeben und aus der dargestellten unteren Fahrstellung in eine nach hinten geschwenkte und angehobene Verladestellung verstellt werden. Dies wird dabei einzig durch die Kraft bewirkt, die von dem Untergrund auf den Unterfahrschutz 14 einwirkt.

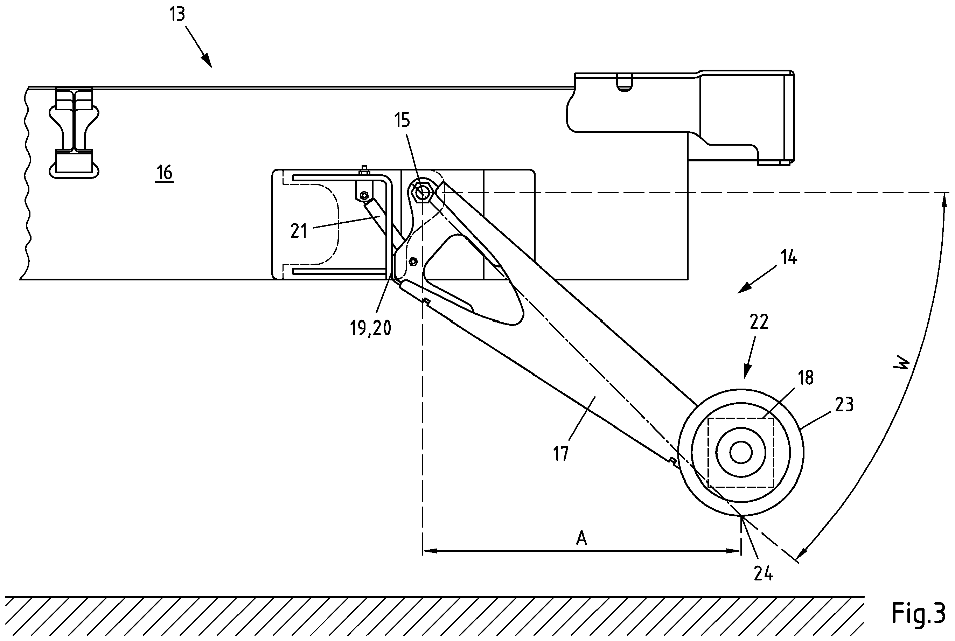

In der Fig. 3 ist das Detail der Fahrgestellgruppe 10 aus der Fig. 2 in einer Seitenansicht dargestellt. Der Unterfahrschutz 14 ist dabei ebenfalls in der unteren Fahrstellung angeordnet. In dieser Fahrstellung liegt der Unterfahrschutz 14 mit Fahrstellungsanschlägen 19 der Stege 17 an korrespondierenden Fahrstellungsanschlägen 20 des Chassis 13 an. Die entsprechende Anlage des Unterfahrschutzes 14 an dem Chassis 14 stellt mithin eine definierte untere Fahrstellung bereit, in der sichergestellt ist, dass der Unterfahrschutz 14 ein Unterfahren des Chassis 13 von einem auffahrenden Fahrzeug zuverlässig verhindern kann. Um sicherzustellen, dass der Unterfahrschutz 14 während normaler Fahrzustände, in denen der Untergrund nicht mit dem Unterfahrschutz 14 in Kontakt kommt, in der unteren Fahrstellung verharrt, ist ein Niederhalter 21 in Form eines als Gasdruckfederelement ausgebildeten Federelements vorgesehen, dessen Rückstellkraft den Unterfahrschutz 14 gegen die Fahrstellungsanschläge 19 drückt. Damit es zudem nicht zu einem übermäßigen Schlagen des Unterfahrschutzes 14 gegen das Chassis 13 kommt, können an den Fahrstellungsanschlägen 19,20 des Unterfahrschutzes 14 und/oder des Chassis 13 Dämpferelemente vorgesehen sein. Dabei handelt es sich dann vorzugsweise um elastische Dämpferelemente die aus Gummi oder dergleichen gebildet sein können. Der Niederhalter 21 stellt zudem eine Rückstellkraft bereit, die überwunden werden kann, sollte der Unterfahrschutz 14 gegen den Untergrund gedrückt werden, wie dies etwa in einer Verladesituation der Fall sein kann.

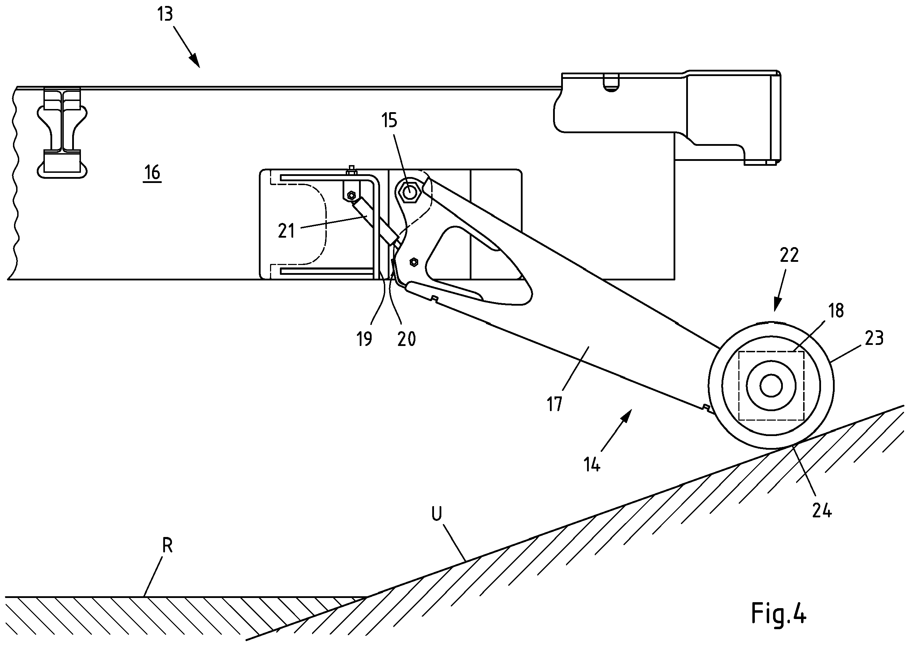

In der Fig. 4 ist eine solche Verladesituation dargestellt. Das Nutzfahrzeug 1 wird in dieser Verladesituation eine Rampe R hinaufgefahren, wobei der Unterfahrschutz 14 mit dem Untergrund U vor der eigentlichen Rampe R in Kontakt kommt, da der Unterfahrschutz 14 gegenüber dem Fahrwerk 11 nennenswert nach hinten beabstandet ist. Wird das Nutzfahrzeug 1 beim Auffahren auf die Rampe R schräg gestellt, kann der Unterfahrschutz 14 dem Untergrund U soweit angenähert werden, dass der Unterfahrschutz 14 auf den Untergrund U aufschlägt. Die entsprechenden Kräfte schwenken den Unterfahrschutz 14 dann aus der unteren Fahrstellung um die Schwenkgelenke 15 in eine obere Verladestellung nach hinten, wie dies in der Fig. 4 dargestellt ist. Das Schwenken des Unterfahrschutzes 14 erfolgt dabei gegen die Rückstellkraft des Niederhalters 21, so dass der Niederhalter 21 den Unterfahrschutz 14 typischerweise durchgängig gegen den Untergrund U drückt und der Unterfahrschutz 14 immer gerade so weit geschwenkt wird, wie es die Verladesituation erfordert, ohne eine Beschädigung des Unterfahrschutzes 14 oder des Chassis 13 zu riskieren.

Der Unterfahrschutz 14 trägt den beiden Querenden zugeordnet jeweils eine Rolle 22, die mit dem Untergrund U in Kontakt kommen und dann entlang des Untergrunds U abrollen kann. Bei der Rolle 22 kann es sich um eine Rolle 22 mit einer Lauffläche 23 aus einem elastischen Material handeln, um den Aufschlag des Unterfahrschutzes 14 auf den Untergrund U zu dämpfen. Die Rollen stellen mithin an ihren Laufflächen 23 Anschlagflächen 24 für den Kontakt des Unterfahrschutzes 14 mit dem Untergrund U bereit, weshalb jede Rolle 22 zudem ein unteres Ende des Unterfahrschutzes 14 bildet. Die Anschlagflächen 24 der Rollen 22 sind ferner in Längsrichtung des Chassis 13 nach hinten von den Schwenkgelenken 15 beabstandet, so dass der Unterfahrschutz 14 beim Aufsetzen auf den Untergrund U nicht verkantet, sondern zuverlässig nach hinten oben schwenkt. Der Abstand A der Anschlagflächen 24 der Rollen 22 von den Schwenkgelenken 15 beträgt in Längsrichtung des Chassis 13 bei der dargestellten und insoweit bevorzugten Fahrgestellgruppe 10 in der unteren Fahrstellung gemäß Fig. 3 etwa 50 cm. Dabei erstrecken sich zudem die Stege 17 bezogen auf eine Gerade zwischen den Anschlagflächen 24 der Rollen 22 und der Schwenkgelenke 15 der Stege 17 in einem Winkel W von etwa 45° bezogen auf die Längserstreckung des Chassis 13.

Wenn sich der Untergrund U beim weiteren Verladen wieder vom Chassis 13 entfernt, so wird der Unterfahrschutz 14 zunehmend wieder zurück in Richtung der unteren Fahrstellung geschwenkt. Dies wird durch eine entsprechende Rückstellkraft der beiden, den Stegen 17 des Unterfahrschutzes 14 zugeordneten Niederhaltern 21 bewirkt. In der unteren Fahrstellung angekommen kann der Unterfahrschutz 14 die Funktion, ein Unterfahren des Chassis 13 zu vermeiden, wieder zuverlässig erfüllen. Dabei bedarf es bei dem dargestellten und insoweit bevorzugten Nutzfahrzeug 1 keines Eingriffs des Fahrers, sei es vor oder nach dem Verladen. Es muss also nicht etwa vor dem Verladen ein Verschwenken des Unterfahrschutzes 14 aus der unteren Fahrstellung freigegeben werden. Es muss auch nicht der Unterfahrschutz 14 vor dem Verladen in einer oberen Verladestellung und/oder nach dem Verladen in der unteren Fahrstellung arretiert werden. Eine Arretierung in der unteren Fahrstellung und/oder in einer Verladestellung könnte zwar vorgesehen sein. In vielen Fällen wird dies aber der Einfachheit halber und aus Kostengründen nicht der Fall sein.

### Bezugszeichenliste:

- 1: Nutzfahrzeug
- 2: Kofferaufbau
- 3: Seitenwand
- 4: Stirnwand
- 5: Dach
- 6: Rückwandtür
- 7: Rückwand
- 8: Bodengruppe
- 9: Ladeboden
- 10: Fahrgestellgruppe
- 11: Fahrwerk
- 12: Achse
- 13: Chassis
- 14: Unterfahrschutz
- 15: Schwenkgelenk
- 16: Längsträger
- 17: Steg
- 18: Querträger
- 19,20: Fahrstellungsanschlag
- 21: Niederhalter
- 22: Rolle
- 23: Lauffläche
- 24: Anschlagfläche
- Z: Zugmaschine

## Patentansprüche

1. Fahrgestellgruppe (10) eines Nutzfahrzeugs (1), insbesondere Lastkraftwagen, Anhänger oder Sattelauflieger, mit einem Chassis (13) und einem dem hinteren Ende des Chassis (13) zugeordneten und von dem Chassis (13) getragenen Unterfahrschutz (14) zur Vermeidung eines Unterfahrens des Chassis (13) im Falle eines Auffahrunfalls, wobei der Unterfahrschutz (14) von einer unteren Fahrstellung in Richtung des hinteren Endes des Chassis (13) und nach oben in eine Mehrzahl von Verladestellungen und zurück verstellbar ist,
**dadurch gekennzeichnet, dass**
wenigstens ein verstellbarer Niederhalter (21) derart vorgesehen ist, so dass der Unterfahrschutz (14) gegen eine Rückstellkraft des Niederhalters (21) von der Fahrstellung in die mehreren Verladestellungen verstellbar ist.

2. Fahrgestellgruppe nach Anspruch 1,
**dadurch gekennzeichnet, dass**
der wenigstens eine Niederhalter (21) als Federelement, insbesondere Gasdruckfederelement, ausgebildet ist.

3. Fahrgestellgruppe nach Anspruch 1 oder 2,
**dadurch gekennzeichnet, dass**
der wenigstens eine Niederhalter (21) so vorgesehen ist, dass der Unterfahrschutz (14) über den gesamten Verstellweg von der unteren Fahrstellung in die Verladestellungen, insbesondere in die oberste, mögliche Verladestellung, entgegen der Rückstellkraft des wenigstens einen Niederhalters (21) verstellbar ist.

4. Fahrgestellgruppe nach einem der Ansprüche 1 bis 3,
**dadurch gekennzeichnet, dass**
der wenigstens eine Niederhalter (21) so vorgesehen ist, dass der Unterfahrschutz (14) selbsttätig, insbesondere zwangsweise, aus den Verladestellungen, insbesondere aus der obersten möglichen Verladestellung, in Richtung der Rückstellkraft des wenigstens einen Niederhalters (21) zurück in die untere Fahrstellung verstellbar ist.

5. Fahrgestellgruppe nach einem der Ansprüche 1 bis 4,
**dadurch gekennzeichnet, dass**
der Unterfahrschutz (14) in den Verladestellungen, insbesondere in der obersten möglichen Verladestellung, nicht arretierbar vorgesehen ist.

6. Fahrgestellgruppe nach einem der Ansprüche 1 bis 5,
**dadurch gekennzeichnet, dass**
das Chassis (13) wenigstens ein Schwenkgelenk (15) zum Schwenken des Unterfahrschutzes (14) von der unteren Fahrstellung in die Verladestellungen, insbesondere die oberste mögliche Verladestellung, und zurück in die untere Fahrstellung aufweist.

7. Fahrgestellgruppe nach einem der Ansprüche 1 bis 6,
**dadurch gekennzeichnet, dass**
das Chassis (13) wenigstens einen Fahrstellungsanschlag (19) zum Anschlagen an wenigstens einen Fahrstellungsanschlag (20) des Unterfahrschutzes (14) in der unteren Fahrstellung aufweist und dass, vorzugsweise, der wenigstens eine Fahrstellungsanschlag (19) des Chassis (13) und/oder der wenigstens eine Fahrstellungsanschlag (20) des Unterfahrschutzes (14) wenigstens ein elastisches Dämpferelement zum Dämpfen des Anschlagens des wenigstens einen Fahrstellungsanschlags (20) des Unterfahrschutzes (14) an den wenigstens einen Fahrstellungsanschlag (19) des Chassis (13) aufweist.

8. Fahrgestellgruppe nach einem der Ansprüche 1 bis 7,
**dadurch gekennzeichnet, dass**
das Chassis (13) wenigstens einen Verladeanschlag zum Anschlagen an wenigstens einen Verladeanschlag des Unterfahrschutzes (14) in der obersten möglichen Verladestellung aufweist und dass, vorzugsweise, der wenigstens eine Verladeanschlag des Chassis (13) und/oder der wenigstens eine Verladeanschlag des Unterfahrschutzes (14) wenigstens ein elastisches Dämpferelement zum Dämpfen des Anschlagens des wenigstens einen Verladeanschlags des Unterfahrschutzes (14) an den wenigstens einen Verladeanschlag des Chassis (13) aufweist.

9. Fahrgestellgruppe nach einem der Ansprüche 1 bis 8,
**dadurch gekennzeichnet, dass**
dem unteren Ende des Unterfahrschutzes (14) zugeordnet wenigstens eine Rolle (22), insbesondere ein Paar Rollen (22), und/oder wenigstens eine Kufe, insbesondere ein Paar Kufen, zur Anlage an einen Untergrund (U) bei einer Verladung vorgesehen ist.

10. Fahrgestellgruppe nach einem der Ansprüche 6 bis 9,
**dadurch gekennzeichnet, dass**
das untere Ende des Unterfahrschutzes (14), vorzugsweise die wenigstens eine Rolle (22), insbesondere das Paar Rollen (22), und/oder die wenigstens eine Kufe, insbesondere das Paar Kufen einen unteren Anschlag (24) gegenüber dem Untergrund (U) bereitstellt und dass der Anschlag (24) in Längsrichtung des Chassis (13) um wenigstens 20 cm, vorzugsweise wenigstens 40 cm, insbesondere wenigstens 60 cm, hinter dem wenigstens einen Schwenkgelenk (15) angeordnet ist.

11. Fahrgestellgruppe nach einem der Ansprüche 1 bis 10,
**dadurch gekennzeichnet, dass**
der Unterfahrschutz (14) wenigstens einen quer zum Chassis (13) verlaufenden Querträger (18) und wenigstens zwei den Querträger (18) mit dem Chassis (13) verbindende Stege (17) vorgesehen sind.

12. Fahrgestellgruppe nach Anspruch 10,
**dadurch gekennzeichnet, dass**
sich die Stege (17) in der unteren Fahrstellung in einem Winkel (W) zur Längserstreckung des Chassis (13) von weniger als 75°, vorzugsweise weniger als 65°, insbesondere von weniger als 55°, in Richtung des Querträgers (18) erstrecken.

13. Fahrgestellgruppe nach einem der Ansprüche 1 bis 12,
**dadurch gekennzeichnet, dass**
das Chassis (13) zwei Längsträger (16) und wenigstens zwei die Längsträger (16) miteinander verbindende Querträger aufweist und dass, vorzugsweise, an dem Chassis (13) wenigstens ein Fahrwerk (11) zum Verfahren des Nutzfahrzeugs (1) festgelegt ist.

14. Bodengruppe (8) eines Nutzfahrzeugs (1), insbesondere Lastkraftwagen, Anhänger oder Sattelauflieger, mit einer Fahrgestellgruppe (10) nach einem der Ansprüche 1 bis 13 und einem sich in Längsrichtung des Chassis (13) oberhalb des Chassis (13) erstreckenden Ladeboden (9) zum Aufstellen von Ladung.

15. Nutzfahrzeug (1), insbesondere Lastkraftwagen, Anhänger oder Sattelauflieger, mit einer Bodengruppe (8) nach Anspruch 14 oder mit einer Fahrgestellgruppe (10) nach einem der Ansprüche 1 bis 13.

## Geänderte Patentansprüche

### Geänderte Patentansprüche gemäss Regel 137(2) EPÜ.

1. Fahrgestellgruppe (10) eines Nutzfahrzeugs (1), insbesondere Lastkraftwagen, Anhänger oder Sattelauflieger, mit einem Chassis (13) und einem dem hinteren Ende des Chassis (13) zugeordneten und von dem Chassis (13) getragenen Unterfahrschutz (14) zur Vermeidung eines Unterfahrens des Chassis (13) im Falle eines Auffahrunfalls, wobei der Unterfahrschutz (14) von einer unteren Fahrstellung in Richtung des hinteren Endes des Chassis (13) und nach oben in eine Mehrzahl von Verladestellungen und zurück verstellbar ist und wobei wenigstens ein verstellbarer Niederhalter (21) derart vorgesehen ist, so dass der Unterfahrschutz (14) gegen eine Rückstellkraft des Niederhalters (21) von der Fahrstellung in die mehreren Verladestellungen verstellbar ist,
**dadurch gekennzeichnet, dass**
das Chassis (13) wenigstens einen in Richtung des hinteren Endes des Chassis (13) weisenden Fahrstellungsanschlag (19) zum Anschlagen an wenigstens einen von dem hinteren Ende des Chassis (13) wegweisenden Fahrstellungsanschlag (20) des Unterfahrschutzes (14) in der unteren, ein Unterfahren des Chassis (13) von einem auffahrenden Fahrzeug verhindernden Fahrstellung aufweist.

2. Fahrgestellgruppe nach Anspruch 1,
**dadurch gekennzeichnet, dass**
der wenigstens eine Niederhalter (21) als Federelement, insbesondere Gasdruckfederelement, ausgebildet ist.

3. Fahrgestellgruppe nach Anspruch 1 oder 2,
**dadurch gekennzeichnet, dass**
der wenigstens eine Niederhalter (21) so vorgesehen ist, dass der Unterfahrschutz (14) über den gesamten Verstellweg von der unteren Fahrstellung in die Verladestellungen, insbesondere in die oberste, mögliche Verladestellung, entgegen der Rückstellkraft des wenigstens einen Niederhalters (21) verstellbar ist.

4. Fahrgestellgruppe nach einem der Ansprüche 1 bis 3,
**dadurch gekennzeichnet, dass**
der wenigstens eine Niederhalter (21) so vorgesehen ist, dass der Unterfahrschutz (14) selbsttätig, insbesondere zwangsweise, aus den Verladestellungen, insbesondere aus der obersten möglichen Verladestellung, in Richtung der Rückstellkraft des wenigstens einen Niederhalters (21) zurück in die untere Fahrstellung verstellbar ist.

5. Fahrgestellgruppe nach einem der Ansprüche 1 bis 4,
**dadurch gekennzeichnet, dass**
der Unterfahrschutz (14) in den Verladestellungen, insbesondere in der obersten möglichen Verladestellung, nicht arretierbar vorgesehen ist.

6. Fahrgestellgruppe nach einem der Ansprüche 1 bis 5,
**dadurch gekennzeichnet, dass**
das Chassis (13) wenigstens ein Schwenkgelenk (15) zum Schwenken des Unterfahrschutzes (14) von der unteren Fahrstellung in die Verladestellungen, insbesondere die oberste mögliche Verladestellung, und zurück in die untere Fahrstellung aufweist.

7. Fahrgestellgruppe nach einem der Ansprüche 1 bis 6,
**dadurch gekennzeichnet, dass**
der wenigstens eine Fahrstellungsanschlag (19) des Chassis (13) und/oder der wenigstens eine Fahrstellungsanschlag (20) des Unterfahrschutzes (14) wenigstens ein elastisches Dämpferelement zum Dämpfen des Anschlagens des wenigstens einen Fahrstellungsanschlags (20) des Unterfahrschutzes (14) an den wenigstens einen Fahrstellungsanschlag (19) des Chassis (13) aufweist.

8. Fahrgestellgruppe nach einem der Ansprüche 1 bis 7,
**dadurch gekennzeichnet, dass**
das Chassis (13) wenigstens einen Verladeanschlag zum Anschlagen an wenigstens einen Verladeanschlag des Unterfahrschutzes (14) in der obersten möglichen Verladestellung aufweist und dass, vorzugsweise, der wenigstens eine Verladeanschlag des Chassis (13) und/oder der wenigstens eine Verladeanschlag des Unterfahrschutzes (14) wenigstens ein elastisches Dämpferelement zum Dämpfen des Anschlagens des wenigstens einen Verladeanschlags des Unterfahrschutzes (14) an den wenigstens einen Verladeanschlag des Chassis (13) aufweist.

9. Fahrgestellgruppe nach einem der Ansprüche 1 bis 8,
**dadurch gekennzeichnet, dass**
dem unteren Ende des Unterfahrschutzes (14) zugeordnet wenigstens eine Rolle (22), insbesondere ein Paar Rollen (22), und/oder wenigstens eine Kufe, insbesondere ein Paar Kufen, zur Anlage an einen Untergrund (U) bei einer Verladung vorgesehen ist.

10. Fahrgestellgruppe nach einem der Ansprüche 6 bis 9,
**dadurch gekennzeichnet, dass**
das untere Ende des Unterfahrschutzes (14), vorzugsweise die wenigstens eine Rolle (22), insbesondere das Paar Rollen (22), und/oder die wenigstens eine Kufe, insbesondere das Paar Kufen einen unteren Anschlag (24) gegenüber dem Untergrund (U) bereitstellt und dass der Anschlag (24) in Längsrichtung des Chassis (13) um wenigstens 20 cm, vorzugsweise wenigstens 40 cm, insbesondere wenigstens 60 cm, hinter dem wenigstens einen Schwenkgelenk (15) angeordnet ist.

11. Fahrgestellgruppe nach einem der Ansprüche 1 bis 10,
**dadurch gekennzeichnet, dass**
der Unterfahrschutz (14) wenigstens einen quer zum Chassis (13) verlaufenden Querträger (18) und wenigstens zwei den Querträger (18) mit dem Chassis (13) verbindende Stege (17) vorgesehen sind.

12. Fahrgestellgruppe nach Anspruch 10,
**dadurch gekennzeichnet, dass**
sich die Stege (17) in der unteren Fahrstellung in einem Winkel (W) zur Längserstreckung des Chassis (13) von weniger als 75°, vorzugsweise weniger als 65°, insbesondere von weniger als 55°, in Richtung des Querträgers (18) erstrecken.

13. Fahrgestellgruppe nach einem der Ansprüche 1 bis 12,
**dadurch gekennzeichnet, dass**
das Chassis (13) zwei Längsträger (16) und wenigstens zwei die Längsträger (16) miteinander verbindende Querträger aufweist und dass, vorzugsweise, an dem Chassis (13) wenigstens ein Fahrwerk (11) zum Verfahren des Nutzfahrzeugs (1) festgelegt ist.

14. Bodengruppe (8) eines Nutzfahrzeugs (1), insbesondere Lastkraftwagen, Anhänger oder Sattelauflieger, mit einer Fahrgestellgruppe (10) nach einem der Ansprüche 1 bis 13 und einem sich in Längsrichtung des Chassis (13) oberhalb des Chassis (13) erstreckenden Ladeboden (9) zum Aufstellen von Ladung.

15. Nutzfahrzeug (1), insbesondere Lastkraftwagen, Anhänger oder Sattelauflieger, mit einer Bodengruppe (8) nach Anspruch 14 oder mit einer Fahrgestellgruppe (10) nach einem der Ansprüche 1 bis 13.
